# DEMANDE DE BREVET EUROPEEN

(11) **EP 0 590 216 A1**
(43) Date de publication de la demande: **06.04.1994**
(21) Numéro de dépôt: 92810734.1
(22) Date de dépôt: 29.09.1992
(51) Int. Cl.: B09B 3/00, B65G 69/04

(54) **Egalisation du profil du tas d'ordures dans une fosse de réception d'une usine d'incinération des ordures**

(71) Demandeur: Stucky, Eric, CH-2300 La Chaux-de-Fonds (CH)
(72) Inventeur: Stucky, Eric, CH-2300 La Chaux-de-Fonds (CH)

(57) **Abrégé**

Le procédé d'égalisation de la surface du dépôt des ordures ménagères dans une fosse (5) d'une usine d'incinération, objet de l'invention, vise 4 fonctions distinctes:
1) Augmenter le volume utile de la fosse (5)
2) Homogénéiser les ordures ménagères par leur brassage.
3) Obtenir une surface horizontale permettant une prise sûre et optimale du grappin (7), dans le cadre d'une commande entièrement automatisée de l'entrée-sortie des déchets de la fosse (5).
4) Obturation de la trémie (2) de déversement des ordures ménagères dans la fosse.

Les différentes phases du dispositif, objet de l'invention sont visibles en figure 2.
Il est constitué d'une lame (1) ayant pour longueur la largeur d'une travée de déversement des ordures ménagères s'insinuant entre le mur de la fosse (5) (figure 1) et les ordures (3).
Ces dernières sont repoussées de (9) en (10) quel que soit le niveau des ordures dans la fosse.
Le déplacement de la lame (1) peut être parfaitement horizontal par une synchronisation ad hoc du mouvement de descente du compas porte-lame en fonction de l'ouverture dudit compas.

## Description

Dans une usine d'incinération des ordures ménagères, les véhicules de récolte des ordures déversent ces dernières dans une fosse, laquelle joue le rôle de réserve intermédiaire ou tampon entre une arrivée irrégulière, souvent massive et une utilisation modérée et régulière résultant de l'alimentation du ou des fours.

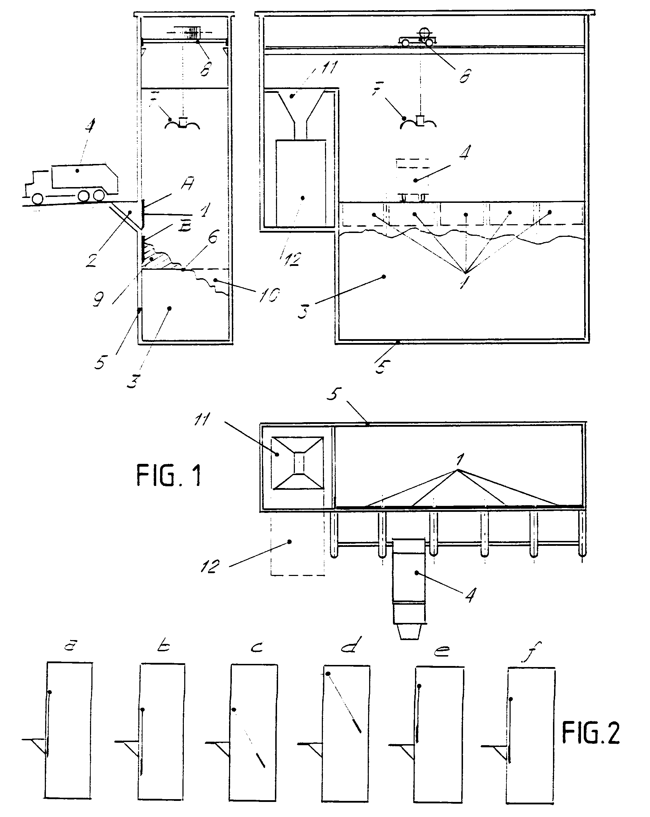

La configuration de quasi toutes les fosses d'usines d'incinération des ordures ménagères dont un exemple d'exécution est représenté en figure 1 selon les trois vues, est caractérisée de manière à en permettre le remplissage par les moyens de récolte des ordures ménagères par une série de portes contiguës 1 disposées sur l'une des faces intérieures de la longueur de ladite fosse 5 dont ses trois dimensions dépendent essentiellement de l'importance de l'usine et des contingences locales.

Les portes-guillotine 1 représentées sur la figure 1, sont précédées d'une sorte de trémie 2 conduisant les ordures 3 du camion 4 dans la fosse 5.

Le cône d'éboulement 6 des ordures dans la fosse a approximativement la configuration et la coupe en travers de la figure 1 dans la mesure où la benne à grappins 7 du pont-roulant 8 n'a pas égalisé la partie haute du tas 9 pour le déposer dans la partie basse ou encore si elle n'a pas transporté la partie haute 9 dans la trémie 11, destinée à alimenter le four 12.

Pour bénéficier du volume géométrique maximum de la fosse sans condamner les portes 1, il est indispensable de déplacer le tas 9 en 10 ; or, l'arrivée souvent continue des ordures ainsi que leur transport dans la trémie 11 ne laisse pas au grappin le temps d'effectuer ce travail.

De plus, l'arrivée du grappin sur un tas fortement incliné, ne permet une prise d'ordures ménagères suffisante que par des manoeuvres appropriées du grutier qui devra empêcher son basculement. L'ensemble de ces manoeuvres de gerbage mobilisent et sollicitent grutier et pont-roulant de manière excessive.

Pour déplacer la partie haute du tas 9 en 10, une lame 1 descendra entre le mur 5 et les ordures 3 passant de la position A à la position B, par un dispositif décrit ci-après. Cette lame poussera ensuite les ordures vers la partie de fosse opposée à la lumière de trémie 2.

Les différentes séquences du dispositif sont illustrées sur la figure 2 et sont les suivantes :
a) la lame obture la lumière de la trémie
b) la lame pénètre verticalement entre le mur de la fosse et les ordures ménagères
c) la lame pousse les ordures ménagères horizontalement, selon le dispositif exposé ci-après
d) la lame s'élève en position ouverte au-dessus du tas d'ordures
e) la lame redescend contre le mur de la fosse complètement dégagée des ordures ménagères
f) la lame redescend et se retrouve en position a)

La présente invention vise quatre actions précises :
1° Rendre le déchargement des véhicules possible au-delà du niveau naturel qui s'établit naturellement à l'intérieur de la fosse dans la prolongation de pente de la trémie de déversement. Cela revient à permettre un stockage considérablement accru puisque, dès le bas du plan incliné de la trémie, le niveau des ordures ménagères pourra être approximativement horizontal.
2° Homogénéiser les déchets en transportant à l'arrière de la fosse une part de ceux qui se trouvent à l'avant. Ce déplacement ou gerbage étant exécuté par le dispositif de l'invention décrit ci-après, le pont-roulant sera considérablement moins sollicité.
3° Obtenir une surface approximativement horizontale des déchets de manière à ce que la benne puisse être placée en un endroit quelconque de la surface de la fosse sans risque de basculement.
   Cette condition est fondamentale pour une commande entièrement automatisée s'inscrivant dans le cadre d'une gestion informatisée des ordures ménagères selon demande de brevet N° 1214/92-1, intitulée "procédé de gestion d'une fosse d'incinération des ordures".
4° Le dispositif selon l'invention réalisera également l'obturation de la lumière de déversement des ordures et se substituera à la porte.

La description qui suit explique l'invention en regard du dessin avec les figures où :
- la figure 1 représente une fosse d'usine d'incinération selon les trois vues.

Le dispositif selon l'invention consiste à introduire devant l'amoncellement d'ordures ménagères à repousser c'est-à-dire au-dessous de chaque lumière de déversement, une lame d'acier d'une longueur approximativement égale à celle de la lumière et d'une largeur permettant de repousser une hauteur d'ordures significative.

Cette lame étant introduite entre le mur et les ordures ménagères, un dispositif hydraulique pousse la lame et les ordures ménagères en direction de l'arrière de la fosse.

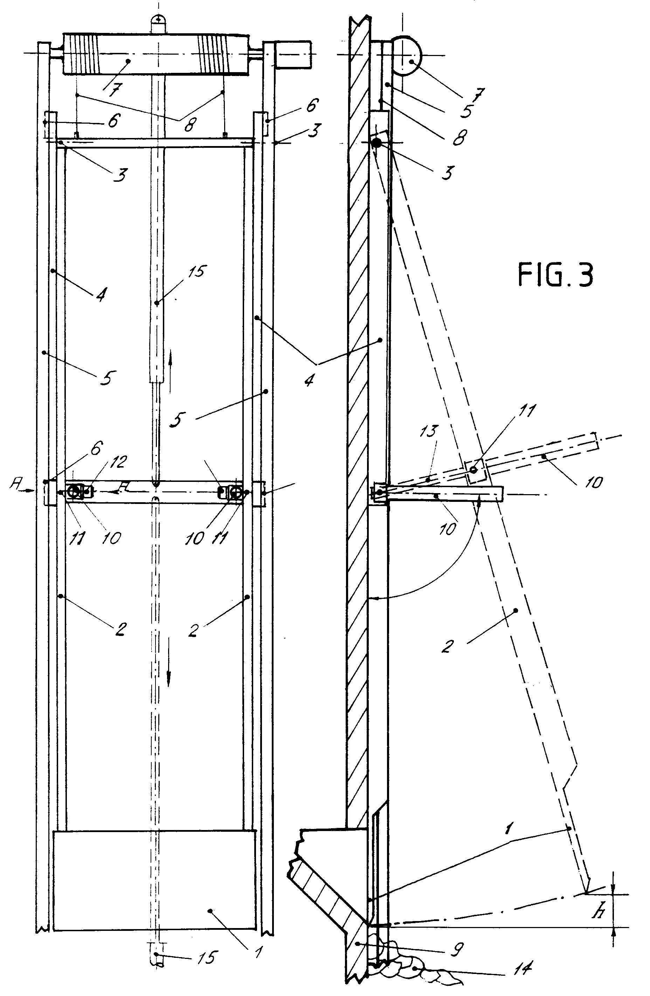

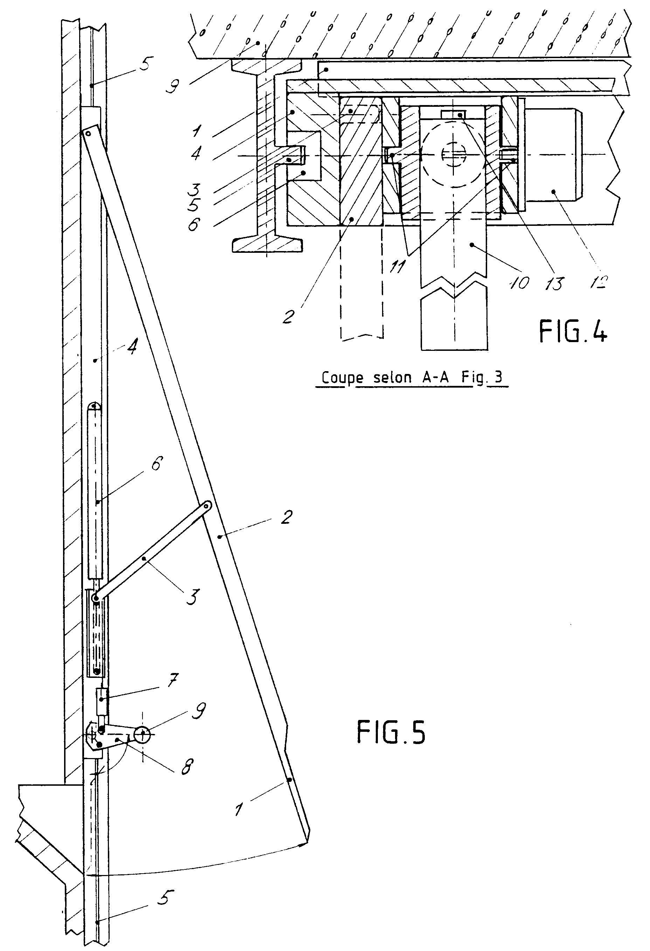

Une forme d'exécution est visible sur la figure 3 constituée d'un cadre pivotant 2 dont les articulations 3 sont solidaires d'un cadre mobile 4 se déplaçant verticalement à l'intérieur de rails de guidage 5 par l'intermédiaire de guides 6 semblables à un ascenseur.

La figure 4 représente une coupe selon A-A de la figure 3 du système de guidage et de la fixation du cadre oscillant ou compas porte-lame 2.

Le déplacement vertical peut être est assuré dans une première forme d'exécution par un treuil électrique ou hydraulique 7 dont les câbles 8 permettent de descendre ou remonter le cadre 4, ou dans une deuxième forme d'exécution dont la même fonction est assurée par des vérins hydrauliques ou électriques 15, entraînant avec lui le compas mobile 2 supportant la lame 1.

Avec le treuil 7, la descente et la pénétration de la lame 1 entre le mur de fosse 9 et les ordures 14 sont assurées par le poids de l'ensemble mobile, tandis qu'avec les vérins 15 travaillant de préférence en traction, la pénétration de la lame peut se faire avec une force considérable.

Le mouvement d'ouverture et fermeture du compas 2 est également assuré par un vérin hydraulique ou électrique 10 solidaire dudit compas.

La lame de pression des ordures peut donc s'abaisser entre le mur de fosse 9 et les ordures 14, puis avancer en repoussant les ordures ménagères selon un arc de cercle centré sur le point d'articulation 3.

Simultanément, un mouvement vertical du haut en bas pourra, en synchronisme avec l'ouverture du compas compenser la remontée h de la lame de manière à obtenir un mouvement parfaitement horizontal de celle-ci.

Lorsque le compas est complètement ouvert, le cadre mobile 4 est remonté. Lorsque celui-ci sera assez haut, c'est-à-dire hors des ordures, le compas pourra être refermé. Ainsi évite-t-on que des déchets s'introduisent entre le cadre du compas et le cadre mobile.

Le compas s'étant imbriqué dans le cadre mobile, ce dernier est redescendu et avec lui compas et lame jusqu'au niveau où, cette dernière obturera entièrement la lumière de la trémie 1, faisant office de porte.

En l'absence d'arrivée d'ordures, cette position de fermeture est souhaitable pour ne pas affaiblir la dépression de la fosse créée à l'intérieur de celle-ci par les ventilateurs d'air primaire et secondaire permettant de confiner les odeurs à l'intérieur de la fosse.

Nous avons vu que les mouvements du compas étaient assurés par les vérins 10. En position fermée du compas, la tige du piston se trouve à l'intérieur du cylindre, lui-même solidaire du bras du compas 2.

La tige de piston 13 , en s'allongeant et s'appuyant sur le cadre mobile 4 éloigne d'autant le compas 2 et par conséquent la lame de pression 1 (voir figure 4 représentant une coupe d'une forme d'exécution du système de guidage du cadre mobile et du compas avec son vérin au repos). L'axe 11 assure la rotation du vérin 10, tandis que l'axe 3 permet la rotation du compas, à un niveau supérieur).

Cependant, en position fermée du compas, la proéminence des vérins 10 à l'intérieur de la fosse est inacceptable en raison des mouvements du grappin, très lourd qui ne manquerait pas de les détériorer.

C'est pourquoi les vérins 10 doivent être escamotables; ils doivent pouvoir être rabattus et s'inscrire dans la hauteur du profil constituant le cadre 2.

Une forme d'exécution consiste à monter les vérins 10 sur l'axe 11 d'un moteur hydraulique ou motoréducteur électrique 12 (voir figure 4).

Ainsi, lorsque le compas est complètement fermé, l'axe de piston 13 n'appuyant plus sur le châssis mobile 4 , le moteur 12 imprime une rotation d'environ 90° au vérin 10 , jusqu'à son complet effacement à l'intérieur du profil du cadre 4.

Pour la manoeuvre d'ouverture, le moteur 12 placera le vérin 10 en position de travail, alors que le compas 2 est fermé (séquence représentée sur la figure 3 en traits pleins) après quoi la tige 13 s'appuiera sur le cadre mobile 4 et ouvrira le compas (traitillés).

Une autre forme d'exécution pourrait faire appel à un petit vérin auxiliaire en lieu et place du moteur hydraulique 12 faisant pivoter le vérin 10 de 90°.

Comme déjà mentionné, le déplacement vertical du chariot peut aussi être assuré par vérin hydraulique 15 en remplacement du treuil 7 (figure 3); dans cette forme d'exécution on disposera d'une force de pénétration accrue de la lame dans les ordures.

On utilisera de préférence deux vérins exploités en traction. L'un tire vers le haut, l'autre vers le bas.

Une autre forme d'exécution permettant l'ouverture du compas est visible sur la figure 5.

Alors que le déplacement vertical du cadre 4 sur les rails de guidage 5 est identique à celui de la figure 3, le compas 2 est commandé par l'intermédiaire d'un levier 3 actionné par un vérin 6, solidaire du cadre mobile 4.

Le piston de ce vérin travaillera de préférence en traction pour l'ouverture du compas.

Pour dépasser le point mort lorsque le compas est fermé, on fera appel à un vérin auxiliaire 7 actionnant un levier 8 dont l'extrémité munie d'un galet 9 ouvre quelque peu le compas 2 créant le moment nécessaire au levier 3, lequel mû par le vérin 6 poursuit le mouvement d'ouverture du compas.

## Revendications

1. Dispositif d'égalisation et d'homogénéisation de la surface d'une fosse de réception des ordures ménagères d'une usine d'incinération, caractérisé en ce qu'il est constitué selon la figure 3 d'une lame 1 d'une longueur approximativement égale à la largeur de la porte de déversement, s'introduisant entre le mur de fosse côté porte et le tas d'ordures, ladite lame étant fixée de part et d'autre de sa longueur à l'extrémité inférieure d'un cadre articulé 2 en sa partie supérieure en 3 sur un autre cadre 4 mobile verticalement coulissant sur les rails fixes 5 par l'intermédiaire de guides 6.

2. Dispositif selon la revendication 1, caractérisé en ce que le mouvement montant de la lame solidaire du cadre constitué par les leviers 2 et articulé autour des pivots 3, s'écartant de la verticalité par l'ouverture du compas ainsi constitué, est compensé par un même déplacement vertical du haut en bas, permettant un nivellement parfaitement horizontal des ordures.

3. Dispositif selon revendications 1 et 2, caractérisé en ce que le point d'articulation du compas est solidaire d'un cadre 4 coulissant sur des rails fixes 5, tel un ascenseur, lesdits rails fixes étant placés de part et d'autre de la porte de déversement.

4. Dispositif selon revendication 1, caractérisé en ce que le mouvement du compas est assuré par au moins un vérin hydraulique ou électrique 10 situé entre le point d'articulation et la lame.

5. Dispositif selon revendications 1 et 4, caractérisé en ce que le vérin 10 de commande du compas est solidaire d'un système articulé à son extrémité côté tige du piston 13, figure 4, permettant d'imprimer une rotation de 90° audit vérin, de manière à ce qu'il ne fasse plus saillie à l'intérieur de la fosse après la fermeture totale du compas.

6. Dispositif selon revendications 1 et 5, caractérisé en ce que la rotation du vérin de commande du compas est assurée par au moins un vérin auxiliaire par l'intermédiaire d'une biellette.

7. Dispositif selon revendications 1 - 5 - 6, caractérisé en ce que la rotation du vérin de commande du compas est assurée par au moins un moteur hydraulique ou motoréducteur électrique 12 actionnant l'axe de rotation du vérin, selon figure 4.

8. Dispositif selon revendication 1, caractérisé en ce que les mouvements verticaux du chariot porte-compas sont assurés par un treuil hydraulique ou électrique, selon figure 3.

9. Dispositif selon revendications 1 et 8, caractérisé en ce que les mouvements verticaux du chariot porte-compas sont assurés par au moins un vérin travaillant de préférence en traction; l'un ou les uns assurant la montée du chariot, l'autre ou les autres, sa descente.

10. Dispositif selon revendications 1 et 3, caractérisé en ce que l'ouverture du compas 2, figure 5 est assurée par l'intermédiaire d'un levier 3 dont une extrémité est rattachée par une articulation au bras oscillant du compas 2, l'autre extrémité étant solidaire par une autre articulation à une coulisse dont le déplacement est égal à la course du piston du vérin 6. Le dispositif de transmission du mouvement d'ouverture et fermeture est semblable à celui d'un parapluie. Le compas 2 et ses dispositifs d'ouverture et fermeture sont solidaires du chariot 4 à déplacement vertical selon la revendication 3.

11. Dispositif selon revendications 1, 3 et 9, caractérisé en ce qu'un vérin auxiliaire 7, figure 5, permet, par l'intermédiaire d'une came ou d'un levier 8, une préouverture du compas 2 de manière à dépasser le point mort sans lequel le dispositif de la revendication 10 serait inopérant.

12. Dispositif selon revendications 1,3,8 et 9, caractérisé en ce que le compas s'élève verticalement en position ouverte après avoir égalisé le tas de déchets avant de se refermer et redescendre de manière à ce que des objets n'entravent pas la fermeture du compas.

13. Dispositif selon revendications 1, 3 et 10 caractérisé en ce que le point d'articulation du compas sur le cadre mobile 4 est décentré dans l'épaisseur dudit cadre, de manière à créer un moment entre le centre de gravité du compas à l'état fermé et ledit point d'articulation, assurant ainsi l'application de la plaque-poussoir 1 contre le mur intérieur de la fosse et en particulier à l'endroit où celle-ci obture la lumière de déversement des ordures.

14. Dispositif selon revendication 1, caractérisé en ce que des moyens de transmissions tels capteurs de position, d'angles, informent un centre de traitement lequel définira l'amplitude de chaque séquence en fonction de la hauteur du tas de déchets. Ce dernier coordonnera aussi les mouvements angulaires et verticaux pour obtenir un mouvement horizontal de la lame d'égalisation.
